# EUROPEAN PATENT APPLICATION

(11) **EP 4 089 472 A1**
(43) Date of publication of application: **16.11.2022**
(21) Application number: 21745044.4
(22) Date of filing: 14.01.2021
(51) Int. Cl.: G02B 30/27

(54) **3D OPTICAL GRATING AND 3D DISPLAY DEVICE**

(30) Priority: 20.01.2020 CN 202010073897; 15.07.2020 CN 202010681239
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2021/071699
(87) International publication number: WO 2021/147752

(57) **Abstract**

The present application relates to the technical field of 3D display, and discloses a 3D grating, comprising a first refraction layer and a second refraction layer that are stacked, wherein refractive indexes of the first refraction layer and the second refraction layer are different; and an anti-reflection layer is arranged at least on a joint surface of the first refraction layer and the second refraction layer, or an end surface, away from the second refraction layer, of the first refraction layer. The 3D grating improves a transmittance of the 3D display apparatus. The present application further discloses a 3D display apparatus.

## Description

The present application claims priority to the Chinese Patent Application with an application number of 202010073897.6 and a title of *"3D Grating and 3D Display Apparatus",* filed to China National Intellectual Property Administration on January 20th, 2020, the disclosures of which are hereby incorporated by reference. The present application further claims priority to the Chinese Patent Application with an application number of 202010681239.5 and a title of *"Lens Grating, Display Module, Display Screen and Display Device",* filed to China National Intellectual Property Administration on July 15th, 2020, the disclosures of which are hereby incorporated by reference.

### TECHNICAL FIELD

The present application relates to the technical field of 3D display, and for example, relates to a 3D grating and a 3D display apparatus.

### BACKGROUND

At present, the naked-eye 3D technology emerges quietly, in which a grating-type naked-eye 3D display apparatus utilizes a principle of binocular parallax to create a 3D feeling to people, i.e., an optical path of incident light is adjusted, so that left eyes of people can receive left-eye images, right eyes of people can receive right-eye images, and the left-eye images and the right-eye images are free from crosstalk with each other.

In a process of implementing embodiments of the present disclosure, at least the following problems are found in related technologies:
Existing grating structures have relatively large reflection loss, causing a problem of low light exitance.

### SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a 3D grating and a 3D display apparatus, to solve the technical problem of low light incidence in existing technologies.

In some embodiments, the 3D grating comprises a first refraction layer and a second refraction layer that are stacked, wherein refractive indexes of the first refraction layer and the second refraction layer are different; and an anti-reflection layer is arranged at least on a joint surface of the first refraction layer and the second refraction layer, or an end surface, away from the second refraction layer, of the first refraction layer.

In some embodiments, the joint surface of the first refraction layer is constructed as a special-shaped surface; and the anti-reflection layer is constructed as a corresponding special-shaped structure and laid on the joint surface.

In some embodiments, the joint surface of the second refraction layer is constructed as a corresponding special-shaped surface and laid on the anti-reflection layer.

In some embodiments, the first refraction layer is a cylindrical lens; the joint surface of the first refraction layer is constructed as a cylindrical surface; and the anti-reflection layer is at least arranged on the cylindrical surface, or an end surface, away from the cylindrical surface, of the cylindrical lens.

In some embodiments, the anti-reflection layer extends along the cylindrical surface.

In some embodiments, a base part is further included; and the first refraction layer is arranged on the base part.

In some embodiments, a reflection layer is arranged on an end surface, away from the first refraction layer, of the base part.

In some embodiments, refractive indexes of the anti-reflection layer arranged on the joint surface of the first refraction layer and the second refraction layer, the anti-reflection layer arranged on the end surface, away from the second refraction layer, of the first refraction layer, and an anti-reflection layer arranged on the end surface, away from the first refraction layer, of the base part are different.

In some embodiments, the refractive index of the first refraction layer is higher than that of the second refraction layer by more than 0.04.

In some embodiments, a 3D display apparatus comprises the 3D display apparatus as mentioned above.

The 3D grating and the 3D display apparatus provided by embodiments of the present disclosure may achieve the following technical effect:
The transmittance of the 3D display apparatus is improved.

The above general description and the following description are exemplary and explanatory only, and are not intended to limit the present application.

### DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Fig. 1 is a structural schematic diagram of a 3D grating provided by embodiments of the present disclosure;
Fig. 2 is another structural schematic diagram of the 3D grating provided by embodiments of the present disclosure; and
Fig. 3 is another structural schematic diagram of the 3D grating provided by embodiments of the present disclosure.

### Reference numerals:

1: 3D grating; 10: first refraction layer; 20: second refraction layer; 30: base part; and 300, 310, 320: anti-reflection layer.

### DETAILED DESCRIPTION

To understand features and technical contents of embodiments of the present disclosure in more detail, implementation of the embodiments of the present disclosure is described in detail below with reference to accompanying drawings; and the accompanying drawings are used for reference only, rather than limiting the embodiments of the present disclosure. In following technical description, for the convenience of explanation, a thorough understanding of the disclosed embodiments is provided through more details. However, one or more embodiments may be implemented without the details. In other cases, to simplify the accompanying drawings, well-known structures and apparatuses may be shown simplistically.

Embodiments of the present disclosure provide a 3D grating, comprising a first refraction layer and a second refraction layer that are stacked, wherein refractive indexes of the first refraction layer and the second refraction layer are different; and an anti-reflection layer is arranged at least on a joint surface of the first refraction layer and the second refraction layer, or an end surface, away from the second refraction layer, of the first refraction layer.

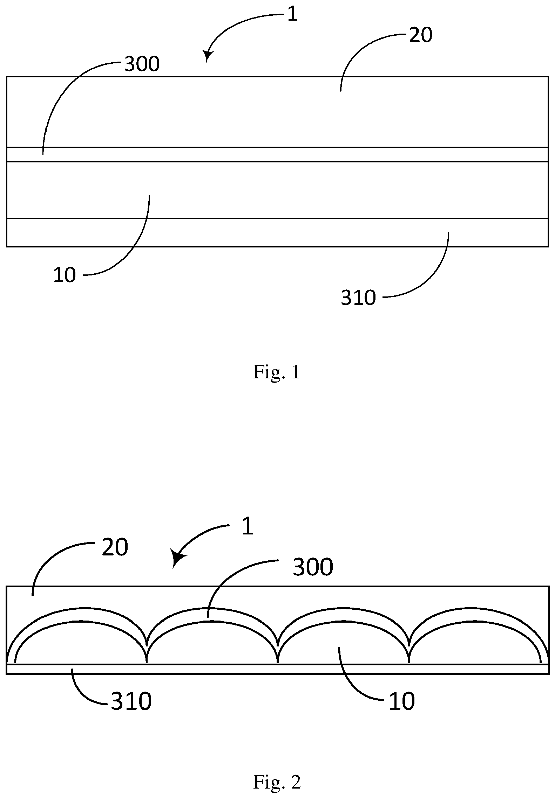

Referring to Fig. 1, the 3D grating provided by embodiments of the present disclosure comprises a first refraction layer 10 and a second refraction layer 20; the first refraction layer 10 and the second refraction layer 20 are stacked; and an anti-reflection layer 300 is arranged at least between the first refraction layer 10 and the second refraction layer 20, or an anti-reflection layer 310 is arranged on an end surface, away from the second refraction layer 20, of the first refraction layer 10. Anti-reflection layers are respectively arranged on two end surfaces of the first refraction layer 10 in the figure.

In some embodiments, a joint surface of the first refraction layer 10 is constructed as a special-shaped surface; and the anti-reflection layer 300 is constructed as a corresponding special-shaped structure and laid on the joint surface.

According to requirements of light refraction, the joint surface of the first refraction layer 10 is constructed as a special-shaped surface, such as joint surfaces constructed in various shapes, which is not limited here. The anti-reflection layer 300 is constructed as a special-shaped structure, corresponding to the joint surface of the first refraction layer 10, and laid on the joint surface.

In some embodiments, the joint surface of the second refraction layer 20 is constructed as a corresponding special-shaped surface and laid on the anti-reflection layer 300.

Under a condition that the two end surfaces, over against the first refraction layer 10, of the anti-reflection layer 300 are respectively constructed as special-shaped surfaces, the anti-reflection layer 300 is constructed as a special-shaped structure, such as a wavy layered structure.

In some embodiments, the first refraction layer is a cylindrical lens; the joint surface of the first refraction layer is constructed as a cylindrical surface; and the anti-reflection layer is at least arranged on the cylindrical surface, or arranged on an end surface, away from the cylindrical surface, of the cylindrical lens.

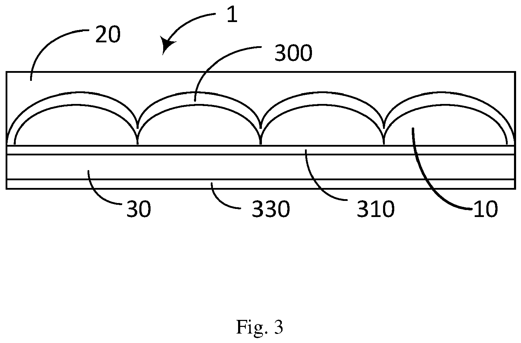

Referring Fig. 2, the first refraction layer 10 is a cylindrical lens; the joint surface of the first refraction layer 10 is constructed as a cylindrical surface; and the anti-reflection layer 300 is arranged on the cylindrical surface, or the anti-reflection layer 310 is arranged on an end surface, away from the cylindrical surface, of the cylindrical lens. As shown in Fig. 3, the anti-reflection layer 300 is arranged on the cylindrical surface; the anti-reflection layer 300 is constructed as a wavy layered structure; and the anti-reflection layer 310 is arranged on the end surface, away from the cylindrical surface, of the cylindrical lens, to improve light transmittance of the 3D display apparatus.

In some embodiments, the anti-reflection layer extends along the cylindrical surface.

Referring to Fig. 2, the anti-reflection layer 300 extends along the cylindrical surface, and is covered on the cylindrical surface.

Referring to Fig. 3, in some embodiments, a base part 30 is further included; and the first refraction layer 10 is arranged on the base part 30.

The anti-reflection layer 310 in Fig. 3 is arranged between the base part 30 and the first refraction layer 10.

Referring to Fig. 3, in some embodiments, a reflection layer 330 is arranged on an end surface, away from the first refraction layer 10, of the base part 30.

The reflection layer 330 is provided to improve a light transmittance of the base part 30.

The base part 30, the first refraction layer 10 and the second refraction layer 20 are made of transparent materials; and the anti-reflection layer is also made of transparent materials.

In some embodiments, refractive indexes of the anti-reflection layer arranged on the joint surface of the first refraction layer and the second refraction layer, the anti-reflection layer arranged on the end surface, away from the second refraction layer, of the first refraction layer, and an anti-reflection layer arranged on the end surface, away from the first refraction layer, of the base part are different.

In some embodiments, the refractive index of the first refraction layer is higher than the refractive index of the second refraction layer by more than 0.04.

Embodiments of the present disclosure further provide a 3D display apparatus, comprising the 3D display apparatus mentioned above.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe the embodiments only and not to limit the claims. As used in the illustration of the embodiments and the claims, unless clearly indicated in the context, the singular forms "a", "an" and "the" are also intended to include the plural forms. Similarly, the term "and/or" as used in the present application is meant to include any and all possible combinations of one or more of the associated listings. In addition, when used in the present application, the term "comprise" and its variations "comprises" and/or "comprising", etc., refer to the presence of stated features, integers, steps, operations, elements, and/or components, but does not preclude the presence or addition of one or more other features, integers, steps, operations, elements, components and/or groupings of these. Without further limitations, an element limited by the phrase "comprises a..." does not preclude the presence of additional identical elements in the process, method or device that includes the element. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

Those skilled in the art may recognize that the units and algorithm steps of each example described in conjunction with the embodiments disclosed herein can be implemented in electronic hardware, or a combination of computer software and electronic hardware. Whether these functions are performed in hardware or software may depend on the specific application and design constraints of the technical solution. Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the specific working processes of the above systems, devices and units, which will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flow charts and block diagrams in the drawings show architectures, functions and operations possibly implemented by systems, methods and computer program products according to the embodiments of the present disclosure. In this regard, each block in the flow charts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flow charts and the block diagrams in the drawings, operations or steps corresponding to different blocks may also occur in different orders than those disclosed, and sometimes there is no specific order between different operations or steps. For example, two continuous operations or steps may be actually performed substantially concurrently, or sometimes may be performed in the reverse order, depending on the functions involved. Each block in the block diagrams and/or flow charts, and combinations of the blocks in the block diagrams and/or flow charts, can be implemented by special hardware-based systems that perform specified functions or actions, or implemented by combinations of special hardware and computer instructions.

## Claims

1. A 3D grating, comprising a first refraction layer and a second refraction layer that are stacked, wherein refractive indexes of the first refraction layer and the second refraction layer are different; and an anti-reflection layer is arranged at least on a joint surface of the first refraction layer and the second refraction layer, or an end surface, away from the second refraction layer, of the first refraction layer.

2. The 3D grating according to claim 1, wherein a joint surface of the first refraction layer is constructed as a special-shaped surface; and the anti-reflection layer is constructed as a corresponding special-shaped structure and laid on the joint surface.

3. The 3D grating according to claim 2, wherein a joint surface of the second refraction layer is constructed as a corresponding special-shaped surface and laid on the anti-reflection layer.

4. The 3D grating according to claim 2 or 3, wherein the first refraction layer is a cylindrical lens; a joint surface of the first refraction layer is constructed as a cylindrical surface; and the anti-reflection layer is at least arranged on the cylindrical surface, or an end surface, away from the cylindrical surface, of the cylindrical lens.

5. The 3D grating according to claim 4, wherein the anti-reflection layer extends along the cylindrical surface.

6. The 3D grating according to claim 1, further comprising a base part, wherein the first refraction layer is arranged on the base part.

7. The 3D grating according to claim 1, wherein a reflection layer is arranged on an end surface, away from the first refraction layer, of the base part.

8. The 3D grating according to claim 7, wherein refractive indexes of an anti-reflection layer arranged on a joint surface of the first refraction layer and the second refraction layer, an anti-reflection layer arranged on an end surface, away from the second refraction layer, of the first refraction layer, and an anti-reflection layer arranged on an end surface, away from the first refraction layer, of the base part are different.

9. The 3D grating according to claim 1, wherein a refractive index of the first refraction layer is higher than a refractive index of the second refraction layer by more than 0.04.

10. A 3D display apparatus, comprising the 3D display apparatus of any one of claims 1-8.
